# EUROPEAN PATENT SPECIFICATION

(11) **EP 4 119 377 B1**
(45) Date of publication and mention of the grant of the patent: **20.05.2026**
(21) Application number: 22184269.3
(22) Date of filing: 12.07.2022
(51) Int. Cl.: B60K 6/387, B60W 10/02, B60W 10/06, B60W 10/08, B60W 20/12, B60W 20/40, B60W 50/08, B60W 50/14, B60K 6/48

(54) **TRAVEL MODE SWITCHING SUPPORT METHOD AND TRAVEL MODE SWITCHING SUPPORT SYSTEM**
UNTERSTÜTZUNGSVERFAHREN FÜR DIE UMSCHALTUNG DES FAHRBETRIEBS UND UNTERSTÜTZUNGSSYSTEM FÜR DIE UMSCHALTUNG DES FAHRBETRIEBS
PROCÉDÉ D'AIDE À LA COMMUTATION DU MODE DE DÉPLACEMENT ET SYSTÈME D'AIDE À LA COMMUTATION DU MODE DE DÉPLACEMENT

(30) Priority: 13.07.2021 JP 2021115606
(43) Date of publication of application: 18.01.2023
(73) Proprietor: Kawasaki Motors, Ltd., Akashi-shi, Hyogo 673-8666 (JP)
(72) Inventor: ONISHI, Rintaro, Akashi-shi, Hyogo, 673-8666 (JP); TOMINAGA, Jun, Akashi-shi, Hyogo, 673-8666 (JP); OSAKI, Kohei, Akashi-shi, Hyogo, 673-8666 (JP); KAWAI, Daisuke, Akashi-shi, Hyogo, 673-8666 (JP)
(74) Representative: Hoefer & Partner Patentanwälte mbB

(56) References cited:
- DE-A1- 102019 212 449
- US-A- 5 815 824
- US-A1- 2012 290 149
- US-A1- 2017 129 475

## Description

### TECHNICAL FIELD

The present invention relates to a travel mode switching support method and a travel mode switching support system capable of selecting and setting one of a plurality of travel modes when a vehicle travels.

### BACKGROUND ART

A hybrid car of a related art is switched to an electric travel mode at the time when the hybrid car arrives in a restriction district in which an automobile that discharges exhaust gas is restricted from entering.

As the related art, JP2003-111208A may be referenced.

In this case, when a driver is not aware of the arrival in the restriction district, the driver may feel uncomfortable in mode switching associated with the arrival in the restriction district.
DE 10 2019 212449 A1 discloses a method for operating a hybrid vehicle, to which an internal combustion engine and an electric motor are assigned. The method comprises providing a current position signal of the hybrid vehicle and providing data with information about an environmental zone that can be driven on, which is representative of a location-based specification in terms of permitted vehicle emissions. The method also includes determining a current distance between the hybrid vehicle and a boundary of the environmental zone as a function of the position signal of the hybrid vehicle and the data on the environmental zone. The method also includes outputting information relating to the environmental zone as a function of the determined distance between the boundary of the environmental zone and the hybrid vehicle.
US 2017/129475 A1 discloses an exemplary adaptive drive control method which includes receiving an input that characterizes a condition outside of an electrified vehicle, and using a powertrain mode controller to select an Auto-EV mode, EV-Later, or an EV-Now mode in response to the input.US 5 815 824 A discloses a navigation system suitable for use in an electric automobile, especially hybrid electric automobiles, which easily and properly controls charging state of a battery in the electric automobile while making use of characteristic features of the navigation system. The navigation system is mounted on the electric automobile. A destination, to which one wants to drive by the automobile, is inputted as drive plan information. Based on a distance planned to be driven by the automobile to the destination and a remaining capacity of the battery determined by remaining capacity detector, it is determined whether the automobile can reach the destination with the remaining capacity of the battery.

### SUMMARY OF INVENTION

An aspect of the present invention is to prevent the driver from feeling uncomfortable.

A travel mode switching support method according to a first aspect of the present invention is defined by the subject matter of the appended independent claim 1.

A travel mode switching support system according to a second aspect of the present invention is defined by the subject matter of the appended independent claim 12.

According to the present invention, before a vehicle enters a restriction area, a driver is notified in advance that the vehicle is present in a preparation area, or a driving support such as switching of a travel mode in response to a preparation signal is performed, so that it is possible to prevent the driver from feeling uncomfortable in a case where the travel mode is switched without permission when the vehicle unexpectedly enters the restriction area.

### BRIEF DESCRIPTION OF DRAWINGS

FIG. 1 is a side view showing a vehicle according to a first embodiment.
FIG. 2 is a schematic view showing a power system of the vehicle shown in FIG. 1.
FIG. 3 is a block diagram showing a control system of the vehicle shown in FIG. 1.
FIG. 4 is a schematic diagram showing the vehicle and a driver in a process in which the vehicle shown in FIG. 1 travels from the outside of a preparation area, passes through the preparation area, and enters a restriction area.
FIG. 5 is an image on a display displaying information for prompting switching a travel mode to an EV mode in the vehicle shown in FIG. 1.
FIG. 6 is an image on the display displaying information indicating that a current travel mode of the vehicle shown in FIG. 1 is the EV mode.
FIG. 7 is an image on the display at the time when the vehicle shown in FIG. 1 enters a restriction area.
FIG. 8 is a schematic diagram showing the vehicle shown in FIG. 1 and the driver when the vehicle travels on an expressway in a case where a part of the preparation area overlaps a part of the expressway.
FIG. 9 is a flowchart performed when a display of the vehicle shown in FIG. 1 displays information for prompting switching a travel mode to a specific travel mode in a case where the vehicle enters a preparation area.
FIG. 10 is a schematic diagram showing the vehicle shown in FIG. 1 and a driver when the vehicle travels in a preparation area according to a modification.
FIG. 11 is a schematic diagram showing the vehicle shown in FIG. 1 and a driver in a process in which the vehicle travels from an outer side of a preparation area, passes through the preparation area, and enters a restriction area.
FIG. 12 is a flowchart performed when a travel mode is automatically switched to a specific travel mode in a case where a vehicle according to a second embodiment enters a preparation area.
FIG. 13 is a schematic diagram showing a state in which a support control device is mounted on a smartphone in a vehicle according to a third embodiment.
FIG. 14 is a schematic diagram showing a state of setting a restriction area around a circuit by a driver and setting a travel mode such that traveling performance is maximized in an ICE mode in a vehicle according to a fourth embodiment.

### DESCRIPTION OF EMBODIMENTS

Hereinafter, a travel mode switching support system and a travel mode switching support method according to an embodiment will be described with reference to the accompanying drawings.

### First Embodiment

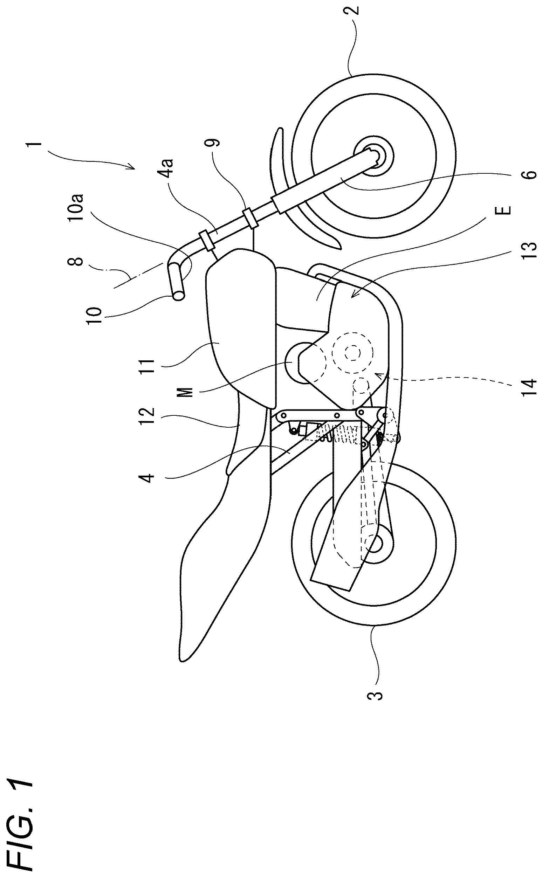

FIG. 1 is a side view showing a vehicle 1 employing a travel mode switching support system according to a first embodiment. As shown in FIG. 1, for example, the vehicle 1 is a straddle type vehicle on which a driver straddles, and is a motorcycle of a hybrid vehicle in the present embodiment. Travel modes of the vehicle 1 when the vehicle 1 travels include an EV mode in which the vehicle 1 travels by being driven by a drive motor only, an ICE mode in which the vehicle 1 travels by being driven by an engine only, and a MIX mode in which the vehicle 1 travels by being driven by both the drive motor and the engine.

The vehicle 1 includes a front wheel 2, a rear wheel 3, a vehicle body frame 4, a front suspension 6 that connects the front wheel 2 to a front portion of the vehicle body frame 4, and a rear suspension 7 that connects the rear wheel 3 to a rear portion of the vehicle body frame 4. The front suspension 6 is provided at a lower portion of a steering shaft 8, and is coupled to a bracket 9 disposed at an interval from the front suspension 6 in an upper-lower direction. The steering shaft 8 coupled to the bracket 9 is supported by a head pipe 4a which is a part of the vehicle body frame 4 in a manner in which the steering shaft 8 is angularly displaceable.

The steering shaft 8 is provided with a handle 10 that is gripped by a hand of a driver. The handle 10 includes an accelerator operator 10a that adjusts acceleration and deceleration of the vehicle 1 when the handle 10 is operated. A fuel tank 11 is provided at a rear side of the handle 10, and a seat 12 on which a driver sits is provided at a rear side of the fuel tank 11. A power unit 13 serving as a traveling drive source is mounted on the vehicle body frame 4 between the front wheel 2 and the rear wheel 3.

The power unit 13 includes an engine E that is an internal combustion engine serving as a prime mover, and a drive motor M that has a drive shaft and is an electric motor serving as a prime mover. In the present embodiment, the engine E and the drive motor M have a function serving as a prime mover that generates a rotational drive force to be transmitted to the rear wheel 3. A transmission 14 is disposed at a rear side of the engine E.

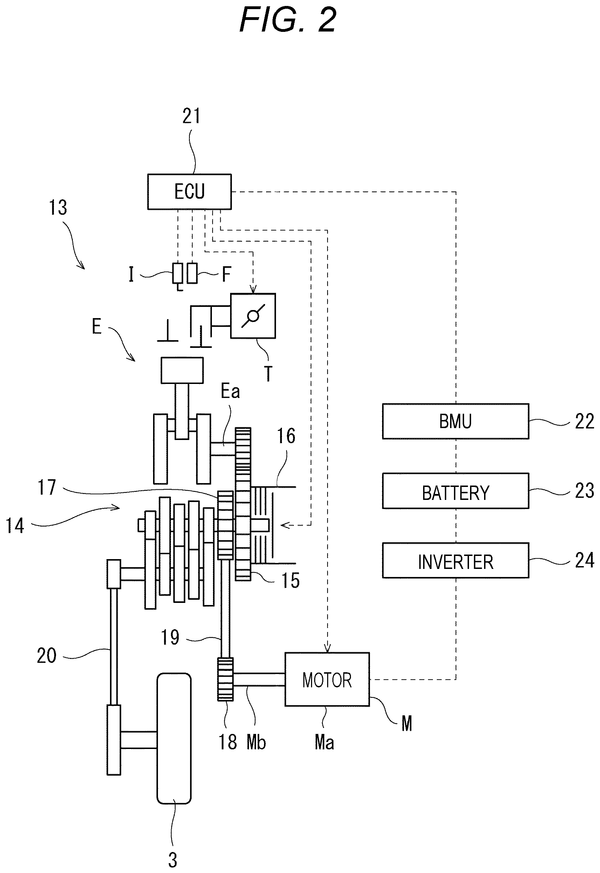

FIG. 2 is a schematic view showing a power system of the motorcycle 1 shown in FIG. 1. The transmission 14 includes an input shaft, an output shaft, and a plurality of gear trains having different deceleration ratios. The transmission 14 is configured to transmit power from the input shaft to the output shaft via the gear trains, and selects one of the gear trains to change a speed. For example, the transmission 14 is a dog clutch type transmission. One end portion of a crankshaft Ea of the engine E is connected to a primary gear 15, so that power can be transmitted.

The primary gear 15 is provided in a manner of being rotatable relative to the transmission 14 around an axis of the transmission 14. The primary gear 15 is connected to the transmission 14 via a main clutch 16 so that power can be transmitted to the transmission 14. The main clutch 16 disconnects or connects a power path from the crankshaft Ea to the transmission 14. The main clutch 16 is driven by hydraulic pressure to disconnect or connect the power path from the crankshaft Ea to the transmission 14.

A sprocket 17 is provided between the primary gear 15 and the transmission 14. The drive motor M includes a motor housing Ma and a motor drive shaft Mb that protrudes from the motor housing Ma, and a sprocket 18 is provided on the motor drive shaft Mb so as to rotate together with the motor drive shaft Mb. Instead of the sprockets 17 and 18, a gear or a pulley may be used as a rotating member. A chain 19 is connected to the sprocket 17 at the transmission 14 side and the sprocket 18 at the motor drive shaft Mb side. As a result, the drive force of the drive motor M is transmitted to the transmission 14 via the sprocket 17. The transmission 14 transmits the drive force to the rear wheel 3 via an output transmission member 20 (for example, a chain, a belt, or the like).

An ECU 21 (an output device) controls the engine E. Specifically, the ECU 21 controls a throttle device T, a fuel injection device F, and an ignition device I. The ECU 21 controls connection and disconnection of the main clutch 16 as described above, and switches whether to transmit the drive force of the engine E to the rear wheel 3 which is a drive wheel. The ECU 21 controls the driving of the drive motor M via a battery management unit (BMU) 22, a battery 23, and an inverter 24. Therefore, the ECU 21 can switch whether to drive the rear wheel 3 by the engine E, by the drive motor M, or by both the engine E and the drive motor M. As a result, the ECU 21 selects a travel mode from an EV mode, an ICE mode, and a MIX mode when the vehicle 1 travels.

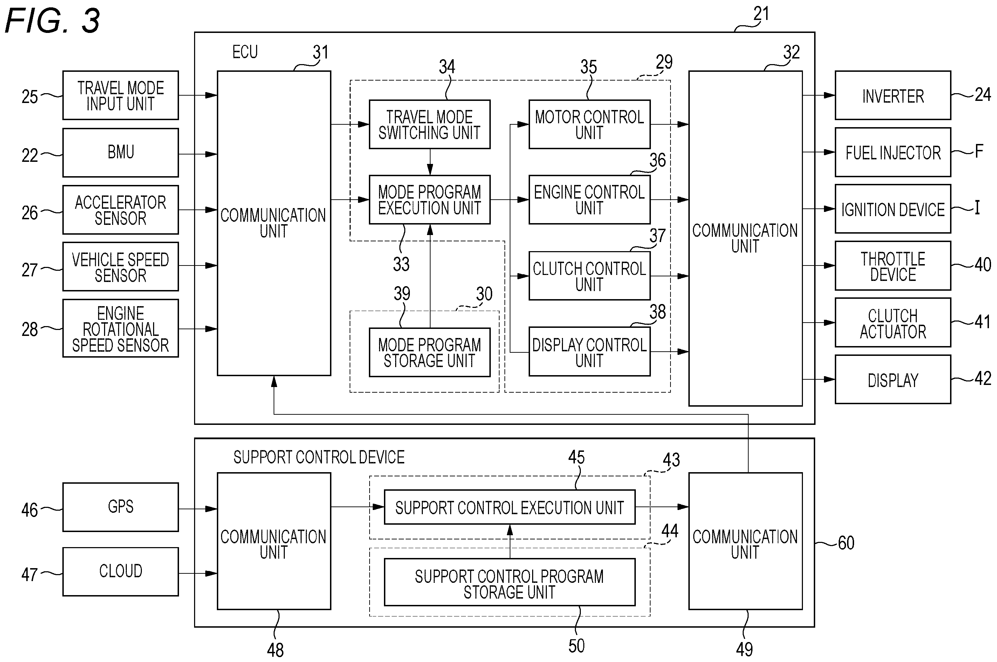

FIG. 3 is a block diagram showing a control system of the vehicle 1 shown in FIG. 1. The ECU 21 receives output signals of a travel mode input unit 25, the BMU 22, an accelerator sensor 26, a vehicle speed sensor 27, an engine rotational speed sensor 28, and the like. The BMU 22 detects a remaining amount, a voltage, and the like of the battery 23 (FIG. 2). The accelerator sensor 26 detects an operation amount (that is, an acceleration/deceleration request degree) of the accelerator operator 10a operated by a driver. The vehicle speed sensor 27 detects a traveling speed of the vehicle 1. The engine rotational speed sensor 28 detects a rotational speed of the crankshaft Ea of the engine E.

In terms of hardware, the ECU 21 includes a processor 29, a memory 30, and communication units 31 and 32. In terms of functions, the ECU 21 includes a mode program execution unit 33, a travel mode switching unit 34, a motor control unit 35, an engine control unit 36, a clutch control unit 37, a display control unit 38, and a mode program storage unit 39.

The communication unit 32 is connected to the inverter 24, a fuel injector F, the ignition device I, the throttle device 40, a clutch actuator 41, and a display 42. The inverter 24 adjusts power to be supplied to the motor M and controls driving by the motor M. The fuel injector F adjusts an amount of fuel to be supplied to a combustion chamber of the engine E. The ignition device I controls ignition by an injector in the engine E. The throttle device 40 adjusts an amount of intake air in the engine E. Driving by the engine E is controlled by controlling the fuel injector F, the ignition device I, and the throttle device 40. The clutch actuator 41 controls whether to drive the rear wheel 3 by the engine E, by the motor M, or by both the engine E and the motor M by controlling connection or disconnection of the main clutch 16 and the sprockets 17 and 18.

The motor control unit 35, the engine control unit 36, and the clutch control unit 37 perform a drive control of the power unit 13 when the vehicle 1 travels. The processor 29 causes the mode program execution unit 33 to execute an arithmetic processing in accordance with information from the accelerator sensor 26, the vehicle speed sensor 27, and the rotational speed sensor 28, or an input from a driver via the travel mode input unit 25, and a program stored in the mode program storage unit 39 of the memory 30, and sets a travel mode.

The mode program execution unit 33 controls the motor M and an output of the engine E by causing the motor control unit 35, the engine control unit 36, and the clutch control unit 37 to control outputs of the inverter 24, the fuel injector F, and the ignition device I in accordance with the set travel mode. The travel mode set by the mode program execution unit 33 in accordance with the program stored in the mode program storage unit 39 can be changed by switching performed by the travel mode switching unit 34. The set travel mode can be switched by transmitting a signal for switching a travel mode from the travel mode switching unit 34 to the mode program execution unit 33.

The mode program storage unit 39 is implemented by the memory 30. The mode program storage unit 39 stores in advance a plurality of types of travel mode programs for determining the presence or absence of the driving of the electric motor M and the engine E and determining a travel mode. For example, state changes of the electric motor M and the engine E according to vehicle conditions (for example, a required torque, an engine rotational speed, and the like) are determined in the travel mode program.

The motor control unit 35 controls an operation of the motor M by controlling the inverter 24 in accordance with a command from the mode program execution unit 33. The engine control unit 36 controls an operation of the engine E by controlling the fuel injector F, the ignition device I, and the throttle device 40 in accordance with a command from the mode program execution unit 33. The clutch control unit 37 controls the clutch actuator 41 in accordance with a command from the mode program execution unit 33. Although the motor control unit 35, the engine control unit 36, the clutch control unit 37, and the display control unit 38 are connected to the communication unit 32 in the ECU 21 in the present embodiment, the present invention is not limited thereto. A control unit other than the motor control unit 35, the engine control unit 36, the clutch control unit 37, and the display control unit 38 may be connected to the communication unit 32. Only some of the motor control unit 35, the engine control unit 36, the clutch control unit 37, and the display control unit 38 may be connected to the communication unit 32. A control unit connected to the communication unit 32 may not be the four control units described above.

In the present embodiment, the vehicle 1 includes a support control device 60 separately from the ECU 21. In the present embodiment, the support control device 60 is provided inside the vehicle 1. Although the ECU 21 and the support control device 60 are separately provided inside the vehicle 1 in the present embodiment, the present invention is not limited to the embodiment described above. The support control device 60 may be provided in the ECU 21.

The support control device 60 includes a processor 43, a memory 44, and communication units 48 and 49. The processor 43 includes a support control execution unit 45. A support control program storage unit 50 stores a program used when a support control is performed.

The support control execution unit 45 executes an arithmetic processing based on a program stored in the support control program storage unit 50. In the present embodiment, a signal is transmitted from the support control device 60 to the ECU 21 as will be described later. In the ECU 21, the display control unit 38 causes the display 42 to display information for prompting the switching of a travel mode, and notifies a driver of the switching of the travel mode based on the signal from the support control device 60.

The support control execution unit 45 of the support control device 60 can acquire position information of the vehicle 1 when the support control execution unit 45 receives the position information from a global positioning system (GPS) 46 serving as a positioning satellite. In addition, the support control execution unit 45 can acquire map information when the support control execution unit 45 receives the map information from a cloud 47. Here, the cloud 47 is an example of a server, and is a storage unit in which data is stored on a network. A user can acquire and use the data of the map information stored in the cloud 47 at any time by accessing the cloud 47. For example, the cloud 47 may be a storage space which is a part of a data center in which devices such as a plurality of server devices are arranged in an aggregated manner. That is, the cloud 47 may be implemented by a server device. The map information may be stored in a server device other than the cloud. The support control execution unit 45 of the support control device 60 detects which area the vehicle 1 is present based on the position information of the vehicle 1 acquired from the GPS 46 and the map information acquired from the cloud. Although the GPS 46 is used as a positioning satellite for detecting the position of the vehicle 1 in the present embodiment, the positioning satellite is not limited to the GPS 46. Other satellites such as "Galileo" and "MICHIBIKI" may be used as the positioning satellite. Although the position information of the vehicle 1 is acquired by receiving the position information from the GPS 46 serving as a positioning satellite in the present embodiment, the present invention is not limited thereto. The position information of the vehicle 1 may be acquired by a method other than the positioning satellite. For example, receivers may be disposed at a plurality of positions in a town, and the position information of the vehicle 1 may be acquired based on the positions of the receivers that received signals transmitted from transmitters mounted on the vehicle 1.

A restriction area in which a specific travel mode to be set when a vehicle travels in a specific area is determined in advance is set in the map information of the cloud 47. Restriction area boundary information indicating a boundary between an inner side and an outer side of the restriction area is acquired from the map information acquired from the cloud 47.

A restriction area in which a specific travel mode to be set when the vehicle 1 travels is determined in advance may be set at a specific position on the map. The restriction area may be determined such that a vehicle travels in an EV mode when the vehicle travels in the restriction area so as not to emit exhaust gas in accordance with, for example, an administrative request or a demand from a facility. The specific travel mode in this case is the EV mode. As described above, the specific travel mode refers to a travel mode that is determined in advance for each restriction area and that is to be set within the restriction area. For example, in a case where there is a densely populated area in a town, in order to improve the environment of residents in the densely populated area, the densely populated area may be set as a restriction area so that exhaust gas is not emitted from a vehicle in the densely populated area, and an EV mode may be set as a specific travel mode in the restriction area. In order to restrict an emission amount of carbon dioxide emitted from the vehicle 1, the EV mode may be set as a specific travel mode in the restriction area. In order to restrict noises generated by the vehicle 1, the EV mode may be set as a specific travel mode in the restriction area. The restriction area may be subjected to a legal binding effect or may not be subjected to a legal binding effect. In a case where the restriction area is subjected to a legal binding effect, when a vehicle travels in a travel mode other than the specific travel mode in the restriction area, a penalty may be given to a driver of the vehicle. When the vehicle travels in the specific travel mode in the restriction area, points may be given to the driver and the points may be used when shopping, or an incentive may be given to a driver who follows the specific travel mode.

In the present embodiment, a preparation area is set outside a restriction area in a manner of being adjacent to the restriction area. The preparation area is an area surrounding an outer side of the restriction area. In the present embodiment, the preparation area is set to be a belt-like area provided outside the restriction area by a predetermined distance. In the present embodiment, the support control device 60 generates preparation area information indicating a preparation area and sets the preparation area on the map. The preparation area may be set on the map in advance, and map information in which a restriction area and a preparation area were set may be stored in the cloud.

Next, a driving support when the vehicle 1 enters a restriction area through a preparation area will be described. In the present embodiment, a support control device determines whether the vehicle 1 is present in a preparation area. In order to determine whether the vehicle 1 is present in the preparation area, position information of the vehicle 1 is received from the GPS 46, and map information is received from the cloud 47. At this time, the support control device 60 sets the preparation area based on a position of a restriction area set in advance in the map information received from the cloud 47. At this time, the preparation area is set on the map based on a program stored in the support control program storage unit 50 of the memory 44.

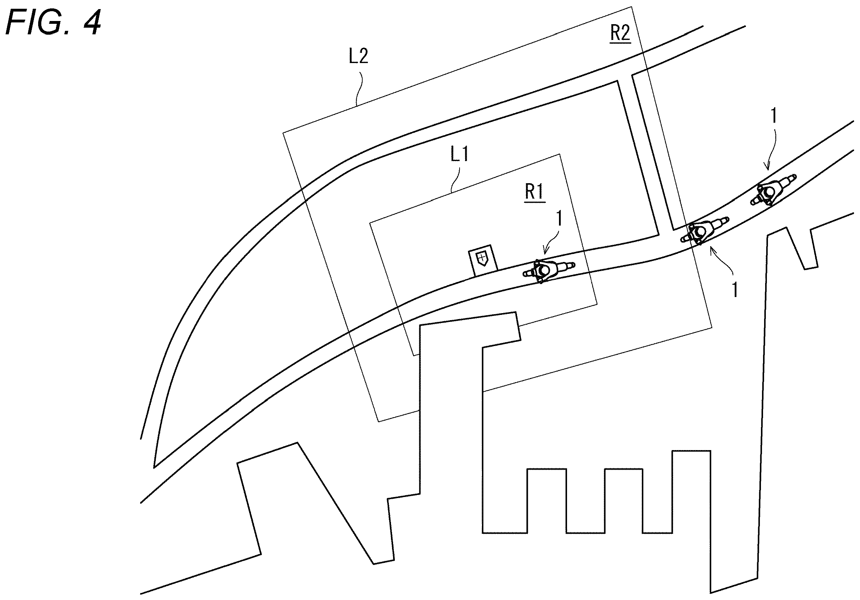

FIG. 4 is a schematic diagram showing the vehicle 1 and a driver in a process in which the vehicle 1 travels from an outer side of a preparation area, passes through the preparation area, and enters a restriction area. In FIG. 4, the restriction area is denoted by R1, and the preparation area is denoted by R2. In the present embodiment, a hospital is shown on the map, and the restriction area R1 in which a vehicle should travel in an EV mode is set around the hospital so that exhaust sound is not emitted from an internal combustion engine. As shown in FIG. 4, since the preparation area R2 is set in a manner of surrounding the outer side of the restriction area R1, the vehicle 1 enters the preparation area R2 before the vehicle 1 enters the restriction area R1. In FIG. 4, an outer edge of the restriction area R1 is indicated by a line L1, and an outer edge of the preparation area R2 is indicated by a line L2. The restriction area R1 is an area inside the line L1, and the preparation area R2 is an area between the line L1 and the line L2.

When the vehicle 1 enters the preparation area R2, the support control device 60 determines that the vehicle 1 has entered the preparation area R2 based on the position information acquired from the GPS 46 and the map information acquired from the cloud 47. When the support control device 60 determines that the vehicle 1 is present in the preparation area R2, the support control device 60 transmits a preparation signal indicating that the vehicle 1 is present in the preparation area R2 to the ECU 21.

In a case where the ECU 21 receives the preparation signal, when a travel mode is already set to the EV mode, the vehicle 1 travels in a state in which the travel mode is set to the EV mode. When the travel mode is set to the ICE mode or the MIX mode different from the EV mode, the display control unit 38 causes the display 42 to display information for prompting switching to the EV mode without changing the travel mode.

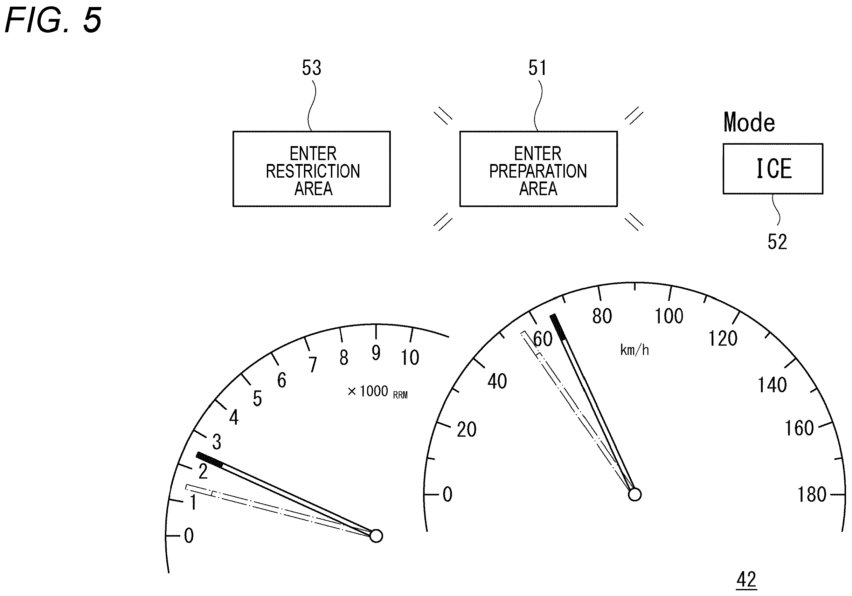

FIG. 5 shows an image on the display 42 displaying information for prompting switching a travel mode to the EV mode. The display 42 includes a preparation area notification unit 51 for notifying the driver that the vehicle 1 has entered the preparation area R2 by blinking when it is determined that the vehicle 1 is present in the preparation area R2. The display 42 includes a travel mode display unit 52 that displays a current travel mode. In the present embodiment, the vehicle 1 travels in the ICE mode before switching a travel mode.

In the present embodiment, the display 42 includes a restriction area notification unit 53 for notifying the driver that the vehicle 1 has entered the restriction area R1 by blinking when it is determined that the vehicle 1 is present in the restriction area R1.

As shown in FIG. 5, when the vehicle 1 enters the preparation area R2, the preparation area notification unit 51 blinks to notify the driver that the vehicle 1 has entered the preparation area R2. When the driver confirms that the preparation area notification unit 51 of the display 42 blinks and confirms the displaying of the information for prompting switching a travel mode to the EV mode, the driver operates the travel mode input unit 25 to switch the travel mode to the EV mode. Therefore, before the vehicle 1 enters the restriction area R1, that is, when the vehicle 1 is present in the preparation area R2, the driver switches the travel mode to the EV mode.

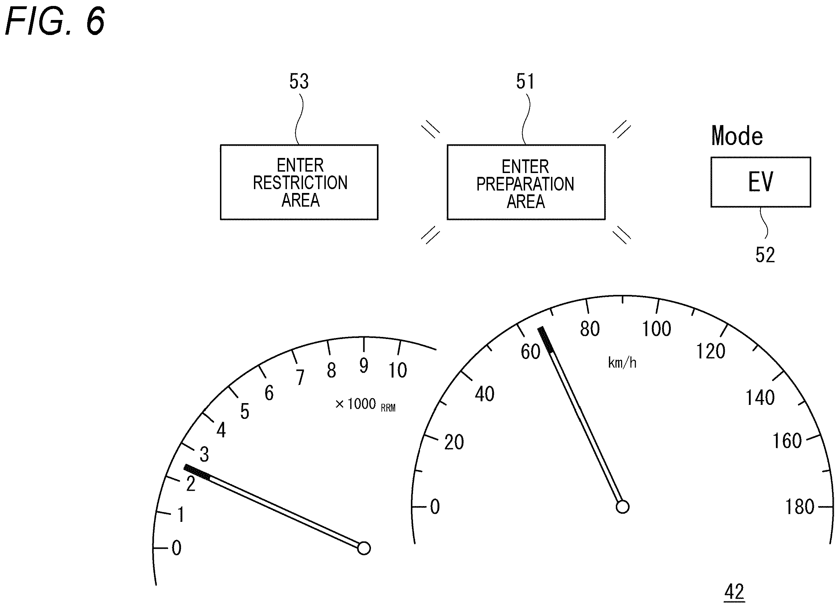

When the driver switches the travel mode to the EV mode, the travel mode display unit 52 displays that a current travel mode is the EV mode. FIG. 6 shows an image on the display 42 in a state in which the travel mode display unit 52 displays that a current travel mode is the EV mode. The driver can confirm that the travel mode is changed to the EV mode by visually checking that the travel mode display unit 52 displays the EV mode.

In the present embodiment, when the ECU 21 receives the preparation signal, the preparation area notification unit 51 continues to blink until the driver switches the travel mode to the EV mode. That is, the preparation area notification unit 51 continues to notify the information for prompting the switching of the travel mode until the travel mode is switched to a specific travel mode defined corresponding to the restriction area R1.

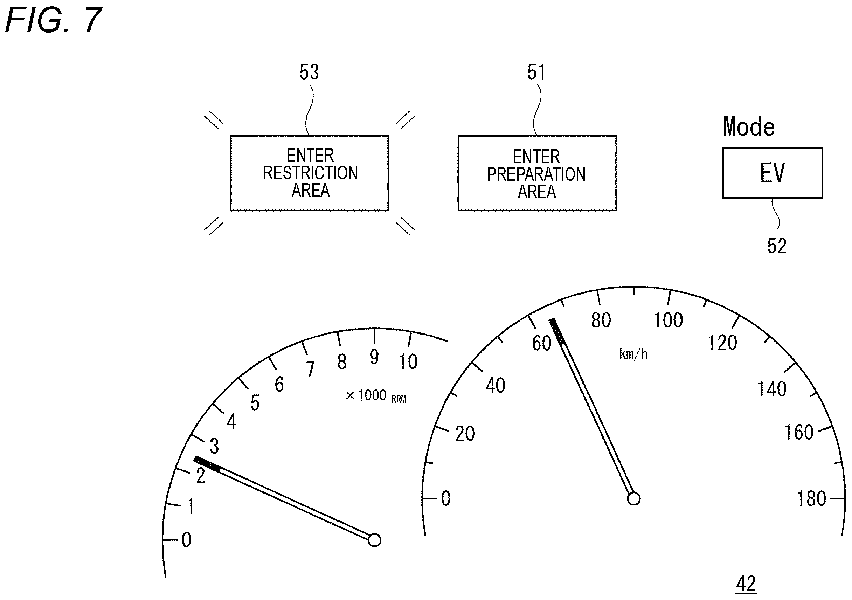

When the vehicle 1 continues to travel, passes through the preparation area R2, and enters the restriction area R1, the restriction area notification unit 53 blinks. FIG. 7 shows a display on the display 42 when the vehicle 1 enters the restriction area R1 and the restriction area notification unit 53 blinks. In the present embodiment, the preparation area notification unit 51 and the restriction area notification unit 53 are provided at different positions, so that notification forms from the respective notification units are different from each other. Therefore, the driver can check an area in which the vehicle 1 is traveling simply by looking at the display 42, and can easily know the area in which the vehicle 1 is traveling.

In the present embodiment, even when the vehicle 1 travels in the preparation area, the preparation signal is not transmitted when the vehicle 1 travels in an exception area such as an expressway. As described above, when an expressway serving as an exception area is provided inside the restriction area or the preparation area, the vehicle 1 does not prompt to switch the travel mode to a specific travel mode in preference to the restriction area or the preparation area inside the exception area, and the vehicle 1 continues to travel on the expressway without changing the travel mode. Here, the exception area refers to an area in which the vehicle 1 does not prompt the driver to switch the travel mode to the specific travel mode and the vehicle 1 does not switch the travel mode even when the vehicle 1 enters the preparation area R2 in a case where the vehicle 1 enters the exception area.

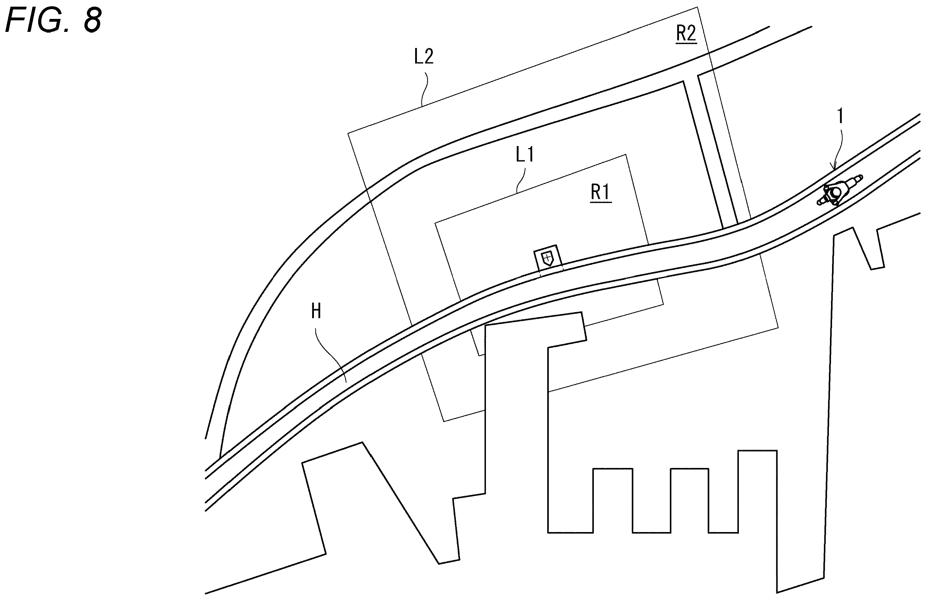

FIG. 8 is a schematic diagram showing the vehicle 1 and the driver when the vehicle 1 travels on an expressway H in a case where a part of the preparation area R2 and a part of the expressway H serving as an exception area overlap each other. As shown in FIG. 8, when the vehicle 1 travels on the expressway H and the support control device 60 determines that the vehicle 1 is passing through the expressway H based on the position information acquired from the GPS 46 and the map information acquired from the cloud 47, a signal is not transmitted from the support control device 60 to the ECU 21 even when the support control device 60 determines that the vehicle 1 enters the preparation area R2. Therefore, the display 42 does not display information for prompting switching of the travel mode. As a result, when the vehicle is traveling on the expressway H, the driver can concentrate on driving. Although the exception area is an expressway and the display 42 does not display information for prompting to change a travel mode on the expressway even when it is determined that the vehicle 1 enters the preparation area R2 in the embodiment described above, the embodiment is not limited thereto. The exception area in which the display 42 does not display information for prompting to change a travel mode even when it is determined that the vehicle 1 enters the preparation area R2 may be another area. For example, other areas such as an automobile dedicated road other than an expressway, an area in which a soundproof wall or the like is provided on a side portion of a road, or a trunk road extending deviating from the center of an urban area may be set such that the display 42 does not display information for prompting to change a travel mode even when it is determined that the vehicle 1 enters the preparation area R2. In other words, an exception area other than an expressway may be set such that the display 42 does not display information for prompting to change a travel mode in preference to the restriction area R1 and the preparation area R2. Even in a case where the vehicle 1 travels in another exception area and the support control device 60 determines that the vehicle 1 travels in another exception area based on position information and map information, when the support control device 60 determines that the vehicle 1 enters the preparation area R2, a signal may not be transmitted from the support control device 60 to the ECU 21.

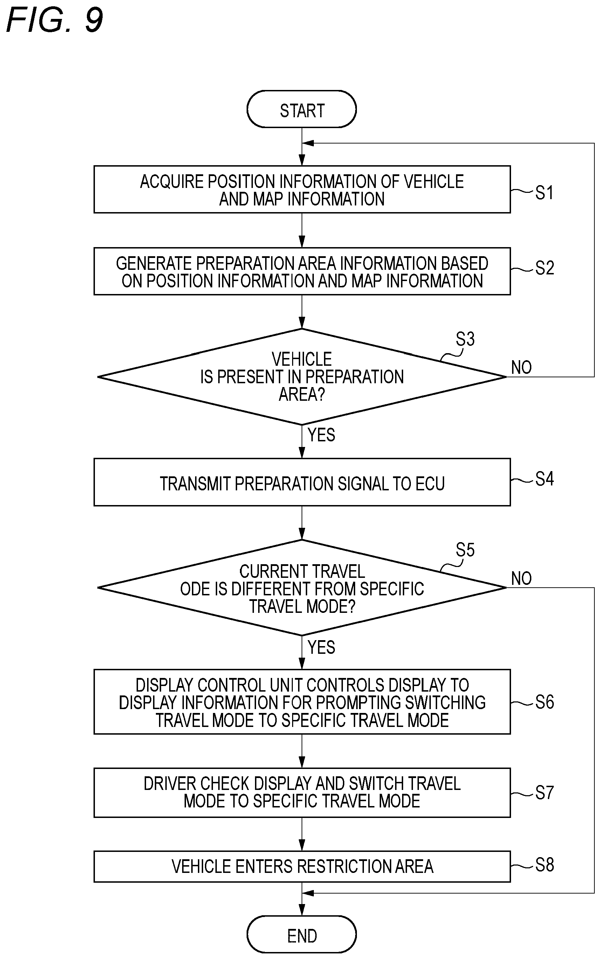

Next, a travel mode switching support method according to the present embodiment will be described with reference to a flowchart shown in FIG. 9. First, the vehicle 1 acquires position information from the GPS 46 and acquires map information from the cloud 47 (S1). In the present embodiment, since the map information of the cloud 47 includes the restriction area boundary information indicating a boundary between an inner side and an outer side of the restriction area R1, when the vehicle 1 receives the map information from the cloud 47, the support control device 60 of the vehicle 1 receives the restriction area boundary information at the same time.

The support control device 60 generates preparation area information indicating the preparation area R2 outside the restriction area R1 based on the restriction area boundary information received by the support control device 60 (S2: preparation area information generation step). When the preparation area information is generated, the support control device 60 determines whether the vehicle 1 is present in the preparation area R2 (S3: determination step).

When the vehicle 1 is not present in the preparation area R2, the flow returns to a processing before step S1. When it is determined that the vehicle 1 is present in the preparation area R2, a preparation signal indicating that the vehicle 1 is present in the preparation area R2 is transmitted to the ECU 21 (S4: preparation signal transmission step).

When the ECU 21 receives the preparation signal, the ECU 21 detects whether a current travel mode is different from a specific travel mode (S5). When the travel mode has already been set to the specific travel mode, the travel mode is not switched, and the flow proceeds to step S8. When the travel mode is different from the specific travel mode, the ECU 21 causes the display control unit 38 to control an output on the display 42, and controls the display 42 to notify (predetermined output) information for prompting switching to the specific travel mode defined corresponding to the restriction area R1 (S6).

When the display 42 displays the information for prompting switching a travel mode to the specific travel mode, the driver visually checks the display 42 and switches the travel mode to the specific travel mode (S7). When the travel mode of the vehicle 1 is switched to the specific travel mode, the travel mode of the vehicle 1 is the specific travel mode, and there is no problem even if the vehicle 1 enters the restriction area R1. When the travel mode of the vehicle 1 is the specific travel mode, the vehicle 1 enters the restriction area R1 (S8). When the vehicle 1 enters the restriction area, the driving support of the vehicle 1 is ended.

According to the present embodiment, when the vehicle 1 enters the preparation area R2 before entering the restriction area R1, the ECU 21 receives the preparation signal to detect in advance that the vehicle 1 is present in the preparation area R2, and the display 42 displays information indicating that the vehicle 1 is present in the preparation area R2. Therefore, before the vehicle 1 enters the restriction area R1, the driver can be aware that the vehicle 1 is about to enter the restriction area R1 from now by issuing a notification for prompting the driver to prepare for entering the restriction area R1. As a result, in a case where the vehicle 1 is set to automatically switch a travel mode when the vehicle 1 enters the restriction area R1, it is possible to prevent the travel mode from being unexpectedly switched, and it is possible to prevent the driver from feeling uncomfortable. In addition, it is possible to prevent the driving from being affected by unexpected switching of the travel mode. In particular, since the vehicle 1 is a motorcycle in the present embodiment, when the travel mode is unexpectedly switched, the driver may lose balance, which may greatly affect the driving. Since the driver can check that the travel mode is to be switched before the travel mode is switched in the present embodiment, the driver can prepare for the switching of the travel mode before the travel mode is switched, and the influence on the driving can be prevented.

When the vehicle 1 is set to manually switch the travel mode before entering the restriction area R1, the driver can reliably switch the travel mode before the vehicle 1 enters the restriction area R1 by switching the travel mode before the vehicle 1 enters the restriction area R1. As a result, the vehicle 1 can be prevented from entering the restriction area R1 in a travel mode other than the specific travel mode without switching the travel mode, and the driver can reliably follow the restriction in the restriction area R1.

Since the support control device 60 generates the preparation area information indicating the preparation area R2 in the present embodiment, it is not necessary for a setter such as a driver to set and generate information indicating the preparation area R2. Therefore, convenience of the vehicle 1 can be improved.

When the vehicle 1 enters the preparation area R2, the driver is notified of the information for prompting the switching of the travel mode until the travel mode is switched in the present embodiment, so that the driver can more reliably switch the travel mode.

The support control device 60 mounted on the vehicle 1 determines whether the vehicle 1 is present in the preparation area R2, and when it is determined that the vehicle 1 is present in the preparation area R2, the support control device 60 transmits the preparation signal to the ECU 21 mounted on the vehicle 1 in the present embodiment, so that the signal can be transmitted by wired communication in the vehicle 1. Therefore, reliability of signal transmission can be improved.

The vehicle 1 is a motorcycle in the embodiment described above. However, the vehicle 1 is not limited to a motorcycle. The vehicle 1 may be a four-wheeled motor vehicle. When the vehicle 1 is a four-wheeled motor vehicle, even when the vehicle 1 enters the restriction area R1 and the travel mode is unexpectedly switched in a state where the driver is not notified that the vehicle 1 is in the preparation area R2, the driving is less likely to be affected. When the travel mode is unexpectedly switched, characteristics of the vehicle are unexpectedly changed, which may cause the driver to feel uncomfortable. In the present embodiment, it is detected in advance that the vehicle 1 is present in the preparation area R2 by receiving the preparation signal when the vehicle 1 enters the preparation area R2 before the vehicle 1 enters the restriction area R1, the display 42 displays information indicating that the vehicle 1 is present in the preparation area R2. Therefore, even when the vehicle 1 is a four-wheeled motor vehicle, before the vehicle 1 enters the restriction area R1, the driver can be aware that the vehicle is about to enter the restriction area R1 from now by issuing a notification for prompting the driver to prepare for entering the restriction area R1. As a result, it is possible to prevent the travel mode from being unexpectedly switched, and it is possible to prevent the driver from feeling uncomfortable. As described above, even in the case where the vehicle 1 is a four-wheeled motor vehicle, it is preferable that the driver can drive without feeling uncomfortable, and it is more preferable that the vehicle 1 is a lightweight vehicle. In a case where the vehicle 1 is a lightweight vehicle, when the travel mode is switched, a change in feeling due to the switching is large. Therefore, when the vehicle 1 unexpectedly enters the restriction area R1, the driver may feel more uncomfortable. Therefore, when the vehicle 1 is a lightweight vehicle, it is advantageous in notifying the driver that the vehicle 1 is about to enter the restriction area R1 from now before the vehicle 1 enters the restriction area R1. In particular, it is more preferable when the vehicle 1 is a straddle type vehicle.

When the vehicle 1 is a four-wheeled motor vehicle and the driver manually switch the travel mode before the vehicle 1 enters the restriction area R1, the driver can reliably switch the travel mode before the vehicle 1 enters the restriction area R1 in a similar manner to the case of a motorcycle.

Only one line indicating the boundary of the outer edge of the preparation are R2 is set in the embodiment described above. However, the present invention is not limited to the embodiment described above. Two lines indicating the outer edge of the preparation area R2 may be set. Specifically, when the support control device 60 sets the preparation area R2, information indicating an inner side outer edge and an outer side outer edge set outside the inner side outer edge may be generated as preparation area boundary information indicating an outer boundary of the preparation area R2.

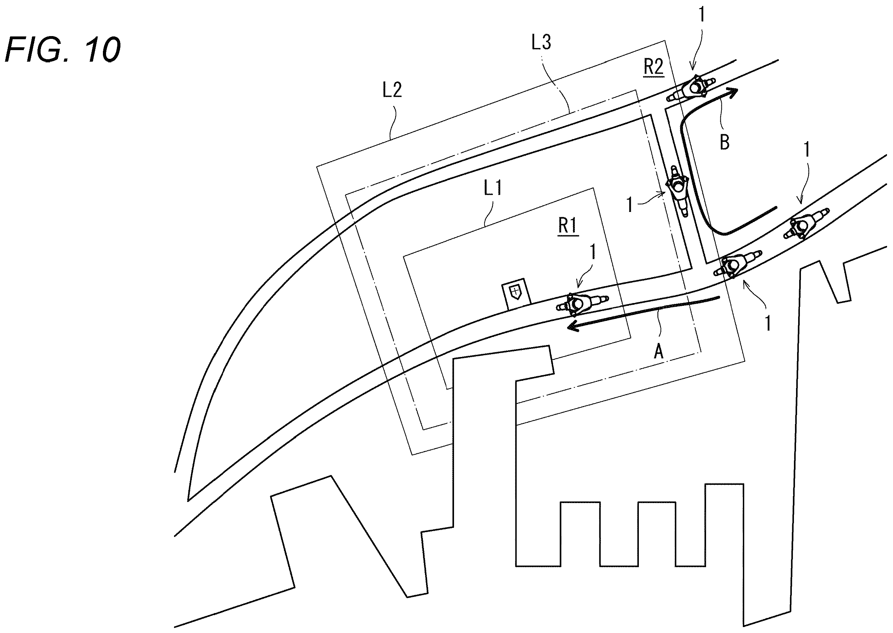

FIG. 10 is a schematic diagram showing the vehicle 1 and the driver when the vehicle 1 travels in the preparation area R2. As shown in FIG. 10, in the present embodiment, two lines of an outer side outer edge L2 and an inner side outer edge L3 are shown as lines indicating boundaries of the outer edge of the preparation area R2. As shown in FIG. 10, the preparation area R2 is an area between an outer edge L1 of the restriction area R1 and the outer side outer edge L2. When the preparation area boundary information is generated, information indicating the inner side outer edge L3 of the preparation area R2 and the outer side outer edge L2 set outside the inner side outer edge L3 is generated by the support control device 60.

Since the support control device 60 sets the inner side outer edge L3 inside the preparation area R2 and the outer side outer edge L2 when the support control device 60 generates the preparation area boundary information, in a case where the vehicle 1 travels in the preparation area R2 from the outer side of the preparation area R2 toward the restriction area R1, it is possible to detect a time when the vehicle 1 passes through the outer side outer edge L2 and a time when the vehicle 1 passes through the inner side outer edge L3.

In the present embodiment, when the vehicle 1 enters an area inside the inner side outer edge L3, the support control device 60 transmits a preparation signal to the ECU 21. When the vehicle 1 enters an area inside the inner side outer edge L3, it is determined that the vehicle 1 enters the preparation area R2. When the vehicle 1 exits to the outside of the outer side outer edge L2, the support control device 60 does not transmit a preparation signal to the ECU 21. As described above, since a trigger position at which the preparation signal is transmitted is different from a trigger position at which the preparation signal is not transmitted, the preparation signal is not transmitted unless the vehicle 1 travels to an area inside the preparation area R2 from the preparation area R2 toward the restriction area R1. When the vehicle 1 enters a position closer to the restriction area R1 than the inner side outer edge L3 along a route A shown in FIG. 10, it is determined that the vehicle 1 entered the preparation area R2, and the preparation signal is transmitted. When the vehicle 1 exits to the outside of the preparation area R2 along a route B shown in FIG. 10 without entering a position closer to the restriction area R1 than the inner side outer edge L3, the preparation signal is not transmitted. Therefore, for example, when the vehicle 1 travels along the outer edge of the preparation area R2, it is possible to prevent the occurrence of a situation in which a state in which the preparation signal is transmitted to the vehicle 1 and a state in which the preparation signal is not transmitted to the vehicle 1 are alternately repeated.

Although the restriction area R1 is set in a certain range around an area of a hospital in the embodiment described above, the invention is not limited to the embodiment described above. The restriction area R1 may be set in an area other than a hospital. For example, the restriction area R1 may be set at a place where an influence of noises is relatively large, such as around a school, and the EV mode may be set as the specific travel mode. The restriction area R1 may have any size. For example, the restriction area R1 may be set over a relatively wide area extending over the entire town, or the restriction area R1 may be set only in a relatively narrow area around a hospital or a school.

### Second Embodiment

Next, a travel mode switching support system according to a second embodiment will be described. Description of portions having the same configurations as those in the first embodiment will be omitted, and only different portions will be described. In the first embodiment, when the vehicle 1 enters the preparation area, the preparation area notification unit of the display 42 blinks to notify the driver that the vehicle 1 entered the preparation area. The second embodiment is different from the first embodiment in that the vehicle 1 automatically switches to a specific travel mode in which the vehicle 1 should travel when the vehicle 1 enters the preparation area.

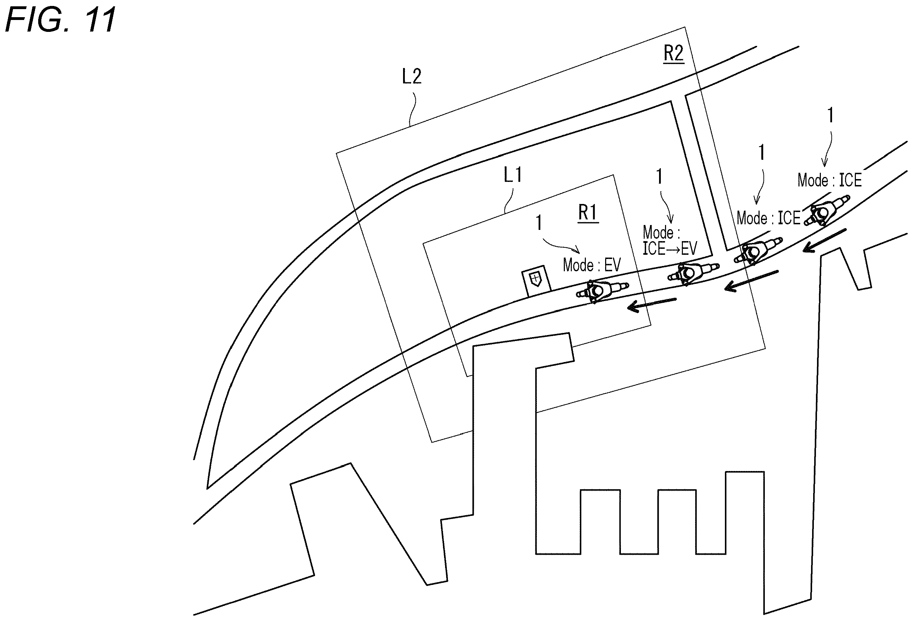

FIG. 11 is a schematic diagram showing the vehicle 1 and the driver in a process in which the vehicle 1 travels from the outer side of the preparation area R2, passes through the preparation area R2, and enters the restriction area R1. As shown in FIG. 11, when the vehicle 1 enters the preparation area R2 and a specific condition is satisfied, the vehicle 1 automatically switches the travel mode in the second embodiment.

In the present embodiment, when it is determined that the vehicle 1 entered the preparation area R2, it is detected whether the vehicle 1 satisfies a predetermined travel mode permission condition. Here, the travel mode permission condition is a condition for determining whether the vehicle 1 is in a state in which the travel mode can be switched. In the present embodiment, when a traveling speed of the vehicle is equal to or lower than a certain speed (for example, equal to or lower than 40 km/h) and the vehicle is not inclined, the support control device 60 determines that the travel mode permission condition is satisfied. When the support control device 60 determines that the vehicle 1 is present in the preparation area R2 and the vehicle 1 satisfies the travel mode permission condition, the support control device 60 outputs a control signal (predetermined output) for instructing the ECU 21 to switch to the specific travel mode, and the ECU 21 switches the travel mode.

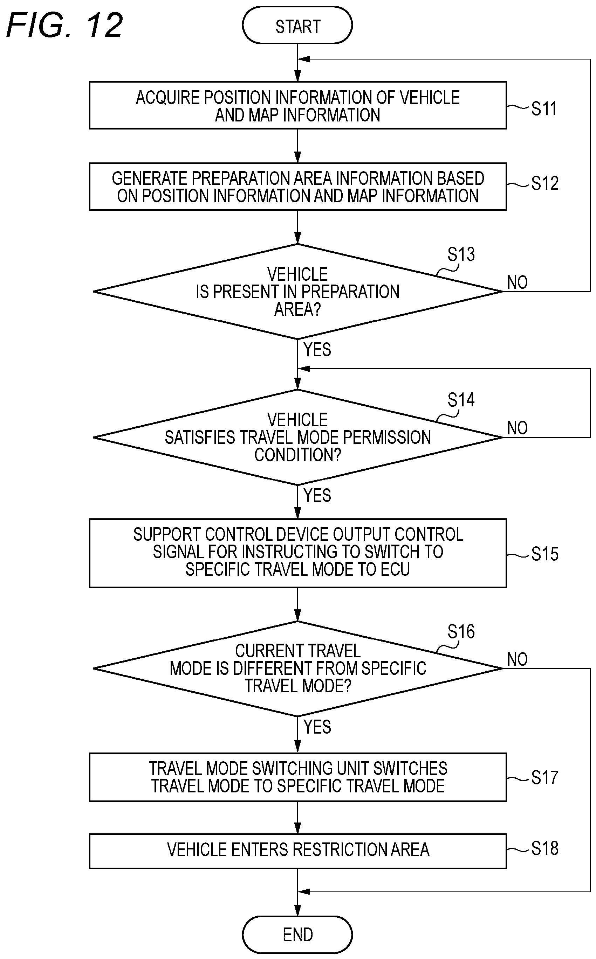

Next, a travel mode switching support method according to the second embodiment will be described with reference to a flowchart shown in FIG. 12. First, the vehicle 1 acquires position information from the GPS 46 and acquires map information from the cloud 47 (S11). In the present embodiment, since the map information of the cloud 47 includes the restriction area boundary information indicating a boundary between an inner side and an outer side of the restriction area R1, when the vehicle 1 receives the map information from the cloud 47, the vehicle 1 acquires the restriction area boundary information.

Based on the restriction area boundary information received by the vehicle 1, the preparation area information indicating the preparation area R2 outside the restriction area is generated (S12: preparation area information generation step). When the preparation area information is generated, it is determined whether the vehicle 1 is present in the preparation area R2 (S13: determination step). When it is determined that the vehicle 1 is not present in the preparation area R2, the flow returns to a processing before step S11. When it is determined that the vehicle 1 is present in the preparation area R2, it is determined whether a traveling state of the vehicle 1 satisfies the predetermined travel mode permission condition (S14). When it is determined that the traveling state of the vehicle 1 does not satisfy the travel mode permission condition, the flow returns to processings before step S14 until it is determined that the traveling state of the vehicle 1 satisfies the travel mode permission condition.

When it is determined that the traveling state of the vehicle 1 satisfies the travel mode permission condition, a control signal (predetermined output) for instructing the vehicle 1 to switch to the specific travel mode is output to the ECU 21 (S15). As a result, a preparation signal indicating that the vehicle 1 is present in the preparation area R2 is transmitted to the ECU 21 (preparation signal transmission step).

When the ECU 21 receives the preparation signal, it is detected whether a current travel mode is different from the specific travel mode set in the restriction area (S16). When the travel mode has already been set to the specific travel mode, the travel mode is not switched, and the flow proceeds to step S18. When the travel mode is different from the specific travel mode, the ECU 21 transmits a signal to the travel mode switching unit 34 and causes the travel mode switching unit 34 to switch the travel mode to the specific travel mode (S17). In the present embodiment, the travel mode switching unit 34 switches the travel mode to the EV mode. Specifically, when the travel mode switching unit 34 transmits a signal to the mode program execution unit 33 and the mode program execution unit 33 receives the signal, the mode program execution unit 33 reads a mode program of the specific travel mode to be set in the restriction area R1 from the mode program storage unit 39 of the memory 30, and outputs an operation command value to the motor control unit 35, the engine control unit 36, and the clutch control unit 37 in accordance with the read mode program. Since the specific travel mode to be set in the restriction area R1 is the EV mode in the present embodiment, the travel mode is switched to the EV mode.

When the travel mode is switched to the specific travel mode, the vehicle 1 enters the restriction area because there is no problem even if the vehicle 1 enters the restriction area (S18). When the vehicle 1 enters the restriction area, the driving support of the vehicle 1 is ended.

In the present embodiment, when the vehicle 1 enters the preparation area and the traveling state satisfies the travel mode permission condition, the control signal for instructing the vehicle 1 to switch to the specific travel mode is output, so that the travel mode is automatically switched to the specific travel mode without the driver performing a switching operation. Therefore, it is possible to save the time and effort for the driver. In addition, the driver does not need to pay attention to the switching of the travel mode, and can concentrate on driving.

### Third Embodiment

Next, a travel mode switching support system according to a third embodiment will be described. Description of portions having the same configurations as those in the first embodiment and the second embodiment will be omitted, and only different portions will be described. The third embodiment is different from the first embodiment and the second embodiment in that the ECU 21 is mounted on the vehicle 1 and the support control device is mounted on a smartphone serving as a mobile terminal.

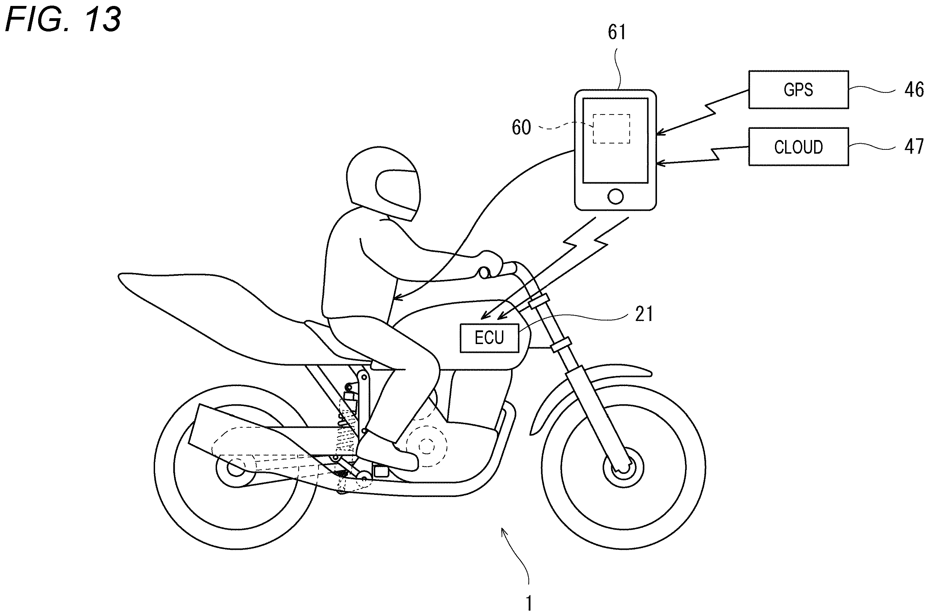

FIG. 13 is a schematic diagram showing a state in which a support control device is mounted on a smartphone 61. The driver of the vehicle 1 carries the smartphone 61. The support control device 60 is mounted on the smartphone 61 in the present embodiment. In the present embodiment, the support control device 60 has a configuration in which a CPU of the smartphone 61 executes a support control program downloaded to the smartphone.

In the present embodiment, since the smartphone 61 functions as the support control device 60, the smartphone 61 determines whether the vehicle 1 is present in the preparation area R2 in the determination step of determining whether the vehicle 1 is present in the preparation area R2. When it is determined that the vehicle 1 is present in the preparation area R2, the smartphone 61 transmits the preparation signal to the ECU 21 of the vehicle 1 in the preparation signal transmission step of transmitting the preparation signal indicating that the vehicle 1 is present in the preparation area R2. Therefore, a device that determines whether the vehicle 1 is present in the preparation area R2 and a transmission device does not need to mounted on the vehicle 1, and the configuration of the vehicle 1 can be simplified. Therefore, the manufacturing cost of the vehicle 1 can be reduced. In addition, a weight of the vehicle 1 can be reduced, and motion performance of the vehicle 1 can be improved.

### Fourth Embodiment

Next, a travel mode switching support system according to a fourth embodiment will be described. Description of portions having the same configurations as those in the first to third embodiments will be omitted, and only different portions will be described. In the first to third embodiments, the restriction area R1 is set in advance, and the specific travel mode set in the restriction area is the EV mode in view of environmental and noise requirements. The fourth embodiment is different from the first to third embodiments in that a restriction area can be individually set by the driver and a specific travel mode set in the restriction area can be individually set by the driver.

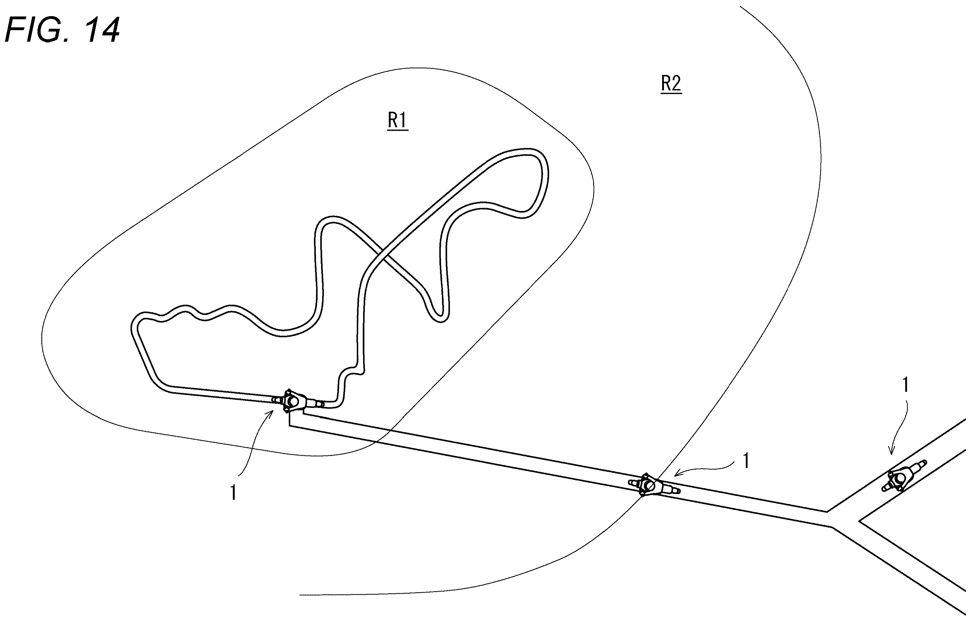

FIG. 14 is a schematic diagram showing a state in which a restriction area and a specific travel mode set in the restriction area can be individually set by the driver. In the present embodiment, among travel modes of the vehicle 1, the ICE mode is set to be subdivided into a travel mode in which fuel efficiency is emphasized, a travel mode in which driving performance is maximized, and the like. The driver sets a travel mode at the time of the vehicle 1 travels in the ICE mode from the subdivided travel modes of the ICE mode. The ECU 21 controls an output of the engine E by controlling the throttle device T, the fuel injection device F, and the ignition device I in accordance with the travel mode set by the driver. The engine E drives a drive wheel at an output corresponding to an operation of the driver for each travel mode.

As shown in FIG. 14, the restriction area R1 is set around a circuit by the driver of the vehicle 1 in the present embodiment. In the restriction area R1, a specific travel mode is set by the driver of the vehicle 1 so that the travel mode is set to a travel mode in which the traveling performance is maximized in the ICE mode.

As described above, the restriction area R1 is individually set by the driver, and the specific travel mode set for each restriction area R1 is individually set by the driver in the present embodiment. When setting the restriction area R1, for example, the driver may perform an input operation by writing on a map displayed on the display 42 of the vehicle 1 by a pen input, or may perform an input operation by displaying a map on a mobile terminal such as a smartphone and writing on the map by a pen input. Alternatively, a map may be displayed on a PC, and an input operation may be performed on the map displayed on the PC.

A preparation area is set outside the restriction area R1 for each restriction area R1. The support control device 60 generates the preparation area information indicating the preparation area R2 in accordance with the restriction area R1 set by the driver so as to set the preparation area R2.

Since the restriction area R1 can be freely set in accordance with circumstances of the driver and the specific travel mode set for each restriction area R1 can be freely set in accordance with circumstances of the driver, usability can be improved.

When the vehicle 1 enters the preparation area R2, a signal is transmitted from the support control device 60 to the ECU 21, and the display 42 displays information for prompting the driver to switch the travel mode to the specific travel mode, or a signal is transmitted from the support control device 60 to the ECU 21, and the travel mode switching unit 34 automatically switches the travel mode to the specific travel mode, as described in the first embodiment to the third embodiment.

A configuration is described in the present embodiment in which both the restriction area R1 and the specific travel mode set for each restriction area R1 can be individually set by the driver. However, the present invention is not limited to the embodiment described above. One of the restriction area R1 and the specific travel mode set for each restriction area R1 may be individually set by the driver.

Although the travel mode is set by the driver so that the periphery of a circuit is set to the restriction area R1 and the travel mode is set to a travel mode in which the traveling performance is maximized in the ICE mode in the restriction area R1 in the embodiment described above, the present invention is not limited to the embodiment described above. The driver may set another area such as an area around the home of the driver as the restriction area R1. The EV mode may be set as the specific travel mode so as not to emit sound from the vehicle 1 in the area around the home. As described above, the driver can freely set the restriction area R1 and can freely set the specific travel mode in the restriction area R1.

Although the travel mode serving as the specific travel mode is set to a travel mode in which the traveling performance is maximized in the ICE mode in the restriction area R1 in the embodiment described above, the travel mode may be set to a mode in which the vehicle 1 travels at a highest speed, or the travel mode may be set to a mode in which an output of the engine E is the highest.

In the restriction area R1, the specific travel mode may be a travel mode in which a minimum speed is set, such as on an expressway, in order to facilitate a smooth traffic flow.

The functions of the elements disclosed in the present specification can be executed using a circuit or a processing circuit that includes a general-purpose processor, a dedicated processor, an integrated circuit, an application specific integrated circuit (ASIC), a circuit in the related art, and/or a combination of the above elements and is implemented or programmed to execute the disclosed functions. Since the processor includes a transistor and other circuits, the processor is regarded as a processing circuit or a circuit. In the present invention, a circuit, a unit, or a means is hardware that executes the listed functions or hardware that is programmed to execute the listed functions. The hardware may be hardware disclosed in the present specification, or may be other known hardware that is programed to or configured to execute the listed functions. When the hardware is a processor considered to be a kind of a circuit, the circuit, the means, or the unit is a combination of hardware and software, and the software is used for implementing the hardware and/or the processor.

Although a configuration in which the map information is acquired from the cloud 47 has been described in the embodiments described above, the present invention is not limited to the embodiments described above. The map information may be stored in a memory mounted on the vehicle. The memory mounted on the vehicle may be the ECU 21. The map information may be stored in a memory mounted on the smartphone.

## Claims

1. A travel mode switching support method for supporting switching of a travel mode of a vehicle (1) configured to travel in a plurality of travel modes, the travel mode switching support method comprising:
determining whether the vehicle (1) is present in a preparation area (R2) that is set adjacently to a restriction area (R1) in which a specific travel mode to be set is predetermined;
transmitting a preparation signal indicating that the vehicle (1) is present in the preparation area (R2) if determining that the vehicle (1) is present in the preparation area (R2); and
when the travel mode of the vehicle (1) is different from the specific travel mode, outputting a predetermined output for switching from a travel mode in use to the specific travel mode if receiving the preparation signal,
wherein the travel mode switching support method further comprises:
receiving a restriction area boundary information indicating a boundary between an inner side and an outer side of the restriction area (R1); and
generating a preparation area information indicating the preparation area (R2) outside the restriction area (R1) based on the received restriction area boundary information,
wherein generating the preparation area information includes generating a preparation area boundary information indicating an inner side outer edge (L3) and an outer side outer edge (L2) that is set outside the inner side outer edge (L3), wherein the inner side outer edge (L3) and the outer side outer edge (L2) indicate boundaries of an outer edge of the preparation area (R2), and
wherein the travel mode switching support method is **characterized in that** transmitting the preparation signal includes transmitting the preparation signal if the vehicle (1) enters an area inside the inner side outer edge (L3) and not transmitting the preparation signal if the vehicle (1) exits to an area outside the outer side outer edge (L2).

2. The travel mode switching support method according to claim 1,
wherein determining whether the vehicle (1) is present includes determining whether the vehicle (1) is present in the preparation area (R2) by a support control device (60) that is mounted on the vehicle (1) and is configured to support switching of the travel mode of the vehicle (1), and
wherein transmitting the preparation signal includes transmitting the preparation signal by the support control device (60).

3. The travel mode switching support method according to claim 1 or 2,
wherein the predetermined output is a notification of information configured to prompt switching to the specific travel mode defined to correspond to the restriction area (R1), and
wherein outputting the predetermined output includes outputting the notification to a driver.

4. The travel mode switching support method according to claim 3,
wherein outputting the predetermined output includes notifying the information configured to prompt switching to the specific travel mode until switching to the specific travel mode defined to correspond to the restriction area (R1) is performed if receiving the preparation signal.

5. The travel mode switching support method according to claim 1 or 2,
wherein the predetermined output is a control signal configured to instruct switching to the specific travel mode, and
wherein outputting the predetermined output includes outputting the control signal if a travel state of the vehicle (1) satisfies a predetermined travel mode permission condition.

6. The travel mode switching support method according to any one of claims 1 to 5, further comprising:
transmitting a restriction signal indicating that the vehicle (1) is present in the restriction area (R1) if determining that the vehicle (1) is present in the restriction area (R1),
wherein outputting the predetermined output includes notifying a driver of information indicating that the vehicle (1) is present in the preparation area (R2) if receiving the preparation signal and notifying the driver of a restriction information indicating that the vehicle (1) is present in the restriction area (R1) if receiving the restriction signal, and
wherein a notification form in a case of notifying the information indicating that the vehicle (1) is present in the preparation area (R2) if receiving the preparation signal is different from a notification form in a case of notifying the information indicating that the vehicle (1) is present in the restriction area (R1) if receiving the restriction signal.

7. The travel mode switching support method according to claim 1,
wherein generating the preparation area information includes generating the preparation area information based on the restriction area boundary information received from a server device that stores the restriction area boundary information associated with the restriction area (R1).

8. The travel mode switching support method according to any one of claims 1 to 7,
wherein one of the restriction area (R1) and the specific travel mode set in the restriction area (R1) is individually set by a driver.

9. The travel mode switching support method according to claim 6,
wherein the method further comprises notifying the driver of information indicating that the vehicle (1) is present in the preparation area (R2) by blinking a preparation area notification unit (51) included in a display (42) and wherein the method further comprises not transmitting the preparation signal when the vehicle (1) travels in an exception area.

10. A travel mode switching support program causing at least one processor (43) to execute the travel mode switching support method according to any one of claims 1 to 9.

11. A non-transitory computer readable medium storing the travel mode switching support program according to claim 10.

12. A travel mode switching support system for supporting switching of a travel mode of a vehicle (1) configured to travel in a plurality of travel modes, the travel mode switching support system comprising:
a support control device (60) configured to receive a preparation signal indicating that the vehicle (1) is present in a preparation area (R2) set adjacently to a restriction area (R1) in which a specific travel mode to be set is predetermined;
an output device (21) configured to communicate with the support control device (60) and output a predetermined output for switching from a travel mode in use to the specific travel mode, when the travel mode of the vehicle (1) is different from the specific travel mode,
wherein the support control device (60) causes the output device (21) to output the predetermined output if receiving the preparation signal, and
wherein the support control device (60) is configured to:
receive a restriction area boundary information indicating a boundary between an inner side and an outer side of the restriction area (R1); and
to generate a preparation area information indicating the preparation area (R2) outside the restriction area (R1) based on the received restriction area boundary information,
wherein generating the preparation area information includes generating a preparation area boundary information indicating an inner side outer edge (L3) and an outer side outer edge (L2) that is set outside the inner side outer edge (L3), wherein the inner side outer edge (L3) and the outer side outer edge (L2) indicate boundaries of an outer edge of the preparation area (R2), and
wherein the travel mode switching support system is **characterized in that** transmitting the preparation signal includes transmitting the preparation signal if the vehicle (1) enters an area inside the inner side outer edge (L3) and not transmitting the preparation signal if the vehicle (1) exits to an area outside the outer side outer edge (L2).

13. The travel mode switching support system according to claim 12,
wherein the output device (21) comprises a communication unit (32) connected to a display (42) including a preparation area notification unit (51) for notifying a driver of information indicating that the vehicle (1) is present in the preparation area (R2) by blinking and wherein the support control device (60) does not transmit the preparation signal when the vehicle (1) travels in an exception area.

## Patentansprüche

1. Fahrmodus-Umschaltunterstützungsverfahren zum Unterstützen des Umschaltens eines Fahrmodus eines Fahrzeugs (1), das konfiguriert ist, um in einer Vielzahl von Fahrmodi zu fahren, wobei das Fahrmodus-Umschaltunterstützungsverfahren umfasst:
Bestimmen, ob das Fahrzeug (1) in einem Vorbereitungsbereich (R2) vorhanden ist, der angrenzend an einen Beschränkungsbereich (R1) eingestellt ist, in dem ein spezifischer Fahrmodus, der eingestellt werden soll, vorbestimmt ist;
Senden eines Vorbereitungssignals, das anzeigt, dass das Fahrzeug (1) in dem Vorbereitungsbereich (R2) vorhanden ist, wenn bestimmt wird, dass das Fahrzeug (1) in dem Vorbereitungsbereich (R2) vorhanden ist; und
wenn sich der Fahrmodus des Fahrzeugs (1) von dem spezifischen Fahrmodus unterscheidet, Ausgeben einer vorbestimmten Ausgabe zum Umschalten von einem Fahrmodus in Verwendung zu dem spezifischen Fahrmodus, wenn das Vorbereitungssignal empfangen wird,
wobei das Fahrmodus-Umschaltunterstützungsverfahren ferner umfasst:
Empfangen einer Beschränkungsbereich-Grenzinformation, die eine Grenze zwischen einer Innenseite und einer Außenseite des Beschränkungsbereichs (R1) anzeigt; und
Erzeugen einer Vorbereitungsbereichsinformation, die den Vorbereitungsbereich (R2) außerhalb des Beschränkungsbereichs (R1) basierend auf der empfangenen Beschränkungsbereich-Grenzinformation anzeigt,
wobei das Erzeugen der Vorbereitungsbereichsinformation das Erzeugen einer Vorbereitungsbereichs-Grenzinformation beinhaltet, die eine Innenseitenaußenkante (L3) und eine Außenseitenaußenkante (L2) anzeigt, die außerhalb der Innenseitenaußenkante (L3) eingestellt ist, wobei die Innenseitenaußenkante (L3) und die Außenseitenaußenkante (L2) Grenzen einer Außenkante des Vorbereitungsbereichs (R2) anzeigen, und
wobei das Fahrmodus-Umschaltunterstützungsverfahren **dadurch gekennzeichnet ist, dass** das Übertragen des Vorbereitungssignals das Übertragen des Vorbereitungssignals beinhaltet, wenn das Fahrzeug (1) in einen Bereich innerhalb der Innenseitenaußenkante (L3) eintritt, und nicht das Übertragen des Vorbereitungssignals, wenn das Fahrzeug (1) in einen Bereich außerhalb der Außenseitenaußenkante (L2) austritt.

2. Fahrmodus-Umschaltunterstützungsverfahren nach Anspruch 1,
wobei das Bestimmen, ob das Fahrzeug (1) vorhanden ist, das Bestimmen beinhaltet, ob das Fahrzeug (1) in dem Vorbereitungsbereich (R2) vorhanden ist, durch eine Unterstützungssteuervorrichtung (60), die an dem Fahrzeug (1) montiert ist und konfiguriert ist, um das Umschalten des Fahrmodus des Fahrzeugs (1) zu unterstützen, und
wobei das Übertragen des Vorbereitungssignals das Übertragen des Vorbereitungssignals durch die Unterstützungssteuervorrichtung (60) beinhaltet.

3. Fahrmodus-Umschaltunterstützungsverfahren nach Anspruch 1 oder 2,
wobei die vorbestimmte Ausgabe eine Benachrichtigung über Informationen ist, die konfiguriert sind, um das Umschalten zu dem spezifischen Fahrmodus zu veranlassen, der definiert ist, um dem Beschränkungsbereich (R1) zu entsprechen, und
wobei das Ausgeben der vorbestimmten Ausgabe das Ausgeben der Benachrichtigung an einen Fahrer beinhaltet.

4. Fahrmodus-Umschaltunterstützungsverfahren nach Anspruch 3,
wobei das Ausgeben der vorbestimmten Ausgabe das Benachrichtigen der Informationen beinhaltet, die konfiguriert sind, um das Umschalten zu dem spezifischen Fahrmodus zu veranlassen, bis das Umschalten zu dem spezifischen Fahrmodus, der definiert ist, um dem Beschränkungsbereich (R1) zu entsprechen, durchgeführt wird, wenn das Vorbereitungssignal empfangen wird.

5. Fahrmodus-Umschaltunterstützungsverfahren nach Anspruch 1 oder 2,
wobei die vorbestimmte Ausgabe ein Steuersignal ist, das konfiguriert ist, um das Umschalten zu dem spezifischen Fahrmodus anzuweisen, und
wobei das Ausgeben der vorbestimmten Ausgabe das Ausgeben des Steuersignals beinhaltet, wenn ein Fahrzustand des Fahrzeugs (1) eine vorbestimmte Fahrmodus-Erlaubnisbedingung erfüllt.

6. Fahrmodus-Umschaltunterstützungsverfahren nach einem der Ansprüche 1 bis 5, ferner umfassend:
Übertragen eines Beschränkungssignals, das anzeigt, dass das Fahrzeug (1) in dem Beschränkungsbereich (R1) vorhanden ist, wenn bestimmt wird, dass das Fahrzeug (1) in dem Beschränkungsbereich (R1) vorhanden ist,
wobei das Ausgeben der vorbestimmten Ausgabe das Benachrichtigen eines Fahrers über Informationen, die anzeigen, dass das Fahrzeug (1) in dem Vorbereitungsbereich (R2) vorhanden ist, wenn das Vorbereitungssignal empfangen wird, und das Benachrichtigen des Fahrers über eine Beschränkungsinformation, die anzeigt, dass das Fahrzeug (1) in dem Beschränkungsbereich (R1) vorhanden ist, wenn das Beschränkungssignal empfangen wird, beinhaltet, und
wobei eine Benachrichtigungsform in einem Fall des Benachrichtigens der Informationen, die anzeigen, dass das Fahrzeug (1) in dem Vorbereitungsbereich (R2) vorhanden ist, wenn das Vorbereitungssignal empfangen wird, sich von einer Benachrichtigungsform in einem Fall des Benachrichtigens der Informationen, die anzeigen, dass das Fahrzeug (1) in dem Beschränkungsbereich (R1) vorhanden ist, wenn das Beschränkungssignal empfangen wird, unterscheidet.

7. Fahrmodus-Umschaltunterstützungsverfahren nach Anspruch 1,
wobei das Erzeugen der Vorbereitungsbereichsinformation das Erzeugen der Vorbereitungsbereichsinformation basierend auf der Beschränkungsbereich-Grenzinformation beinhaltet, die von einer Servervorrichtung empfangen wird, die die Beschränkungsbereich-Grenzinformation speichert, die dem Beschränkungsbereich (R1) zugeordnet ist.

8. Fahrmodus-Umschaltunterstützungsverfahren nach einem der Ansprüche 1 bis 7,
wobei einer von dem Beschränkungsbereich (R1) und dem spezifischen Fahrmodus, der in dem Beschränkungsbereich (R1) eingestellt ist, individuell von einem Fahrer eingestellt wird.

9. Fahrmodus-Umschaltunterstützungsverfahren nach Anspruch 6,
wobei das Verfahren ferner das Benachrichtigen des Fahrers über Informationen, die anzeigen, dass das Fahrzeug (1) in dem Vorbereitungsbereich (R2) vorhanden ist, durch Blinken einer Vorbereitungsbereich-Benachrichtigungseinheit (51), die in einer Anzeige (42) enthalten ist, umfasst und wobei das Verfahren ferner das Nichtübertragen des Vorbereitungssignals, wenn das Fahrzeug (1) in einem Ausnahmebereich fährt, umfasst.

10. Fahrmodus-Umschaltunterstützungsprogramm, das mindestens einen Prozessor (43) veranlasst, das Fahrmodus-Umschaltunterstützungsverfahren nach einem der Ansprüche 1 bis 9 auszuführen.

11. Nichtflüchtiges computerlesbares Medium, das das Fahrmodus-Umschaltunterstützungsprogramm nach Anspruch 10 speichert.

12. Fahrmodus-Umschaltunterstützungssystem zum Unterstützen des Umschaltens eines Fahrmodus eines Fahrzeugs (1), das konfiguriert ist, um in einer Vielzahl von Fahrmodi zu fahren, wobei das Fahrmodus-Umschaltunterstützungssystem umfasst:
eine Unterstützungssteuervorrichtung (60), die konfiguriert ist, um ein Vorbereitungssignal zu empfangen, das angibt, dass das Fahrzeug (1) in einem Vorbereitungsbereich (R2) vorhanden ist, der angrenzend an einen Beschränkungsbereich (R1) eingestellt ist, in dem ein spezifischer Fahrmodus, der eingestellt werden soll, vorbestimmt ist;
eine Ausgabevorrichtung (21), die konfiguriert ist, um mit der Unterstützungssteuervorrichtung (60) zu kommunizieren und eine vorbestimmte Ausgabe auszugeben, um das Umschalten von einem Fahrmodus in Verwendung zu dem spezifischen Fahrmodus zu veranlassen, wenn sich der Fahrmodus des Fahrzeugs (1) von dem spezifischen Fahrmodus unterscheidet,
wobei die Unterstützungssteuervorrichtung (60) die Ausgabevorrichtung (21) veranlasst, die vorbestimmte Ausgabe auszugeben, wenn sie das Vorbereitungssignal empfängt, und
wobei die Unterstützungssteuervorrichtung (60) konfiguriert ist, um:
eine Beschränkungsbereich-Grenzinformation zu empfangen, die eine Grenze zwischen einer Innenseite und einer Außenseite des Beschränkungsbereichs (R1) anzeigt; und
eine Vorbereitungsbereichsinformation zu erzeugen, die den Vorbereitungsbereich (R2) außerhalb des Beschränkungsbereichs (R1) basierend auf der empfangenen Beschränkungsbereich-Grenzinformation anzeigt,
wobei das Erzeugen der Vorbereitungsbereichsinformation das Erzeugen einer Vorbereitungsbereichs-Grenzinformation beinhaltet, die eine Innenseitenaußenkante (L3) und eine Außenseitenaußenkante (L2) anzeigt, die außerhalb der Innenseitenaußenkante (L3) eingestellt ist, wobei die Innenseitenaußenkante (L3) und die Außenseitenaußenkante (L2) Grenzen einer Außenkante des Vorbereitungsbereichs (R2) anzeigen, und
wobei das Fahrmodus-Umschaltunterstützungssystem **dadurch gekennzeichnet ist, dass** das Übertragen des Vorbereitungssignals das Übertragen des Vorbereitungssignals beinhaltet, wenn das Fahrzeug (1) in einen Bereich innerhalb der Innenseitenaußenkante (L3) eintritt, und nicht das Übertragen des Vorbereitungssignals, wenn das Fahrzeug (1) in einen Bereich außerhalb der Außenseitenaußenkante (L2) austritt.

13. Fahrmodus-Umschaltunterstützungssystem nach Anspruch 12,
wobei die Ausgabevorrichtung (21) eine Kommunikationseinheit (32) umfasst, die mit einer Anzeige (42) verbunden ist, die eine Vorbereitungsbereich-Benachrichtigungseinheit (51) zum Benachrichtigen eines Fahrers über Informationen, die anzeigen, dass das Fahrzeug (1) in dem Vorbereitungsbereich (R2) vorhanden ist, durch Blinken beinhaltet, und wobei die Unterstützungssteuervorrichtung (60) das Vorbereitungssignal nicht überträgt, wenn das Fahrzeug (1) in einem Ausnahmebereich fährt.

## Revendications

1. Procédé d'aide à la commutation de mode de déplacement pour aider à la commutation d'un mode de déplacement d'un véhicule (1) configuré pour se déplacer dans une pluralité de modes de déplacement, le procédé d'aide à la commutation de mode de déplacement comprenant :
la détermination si le véhicule (1) est présent dans une zone de préparation (R2) qui est définie de manière adjacente à une zone de restriction (R1) dans laquelle un mode de déplacement spécifique à définir est prédéterminé ;
la transmission d'un signal de préparation indiquant que le véhicule (1) est présent dans la zone de préparation (R2) s'il est déterminé que le véhicule (1) est présent dans la zone de préparation (R2) ; et
lorsque le mode de déplacement du véhicule (1) est différent du mode de déplacement spécifique, la sortie d'une sortie prédéterminée pour commuter d'un mode de déplacement en cours d'utilisation au mode de déplacement spécifique s'il reçoit le signal de préparation,
dans lequel le procédé d'aide à la commutation de mode de déplacement comprend en outre :
la réception d'une information de limite de zone de restriction indiquant une limite entre un côté intérieur et un côté extérieur de la zone de restriction (R1) ; et
la génération d'une information de zone de préparation indiquant la zone de préparation (R2) à l'extérieur de la zone de restriction (R1) sur la base de l'information de limite de zone de restriction reçue,
dans lequel la génération de l'information de zone de préparation comprend la génération d'une information de limite de zone de préparation indiquant un bord extérieur de côté intérieur (L3) et un bord extérieur de côté extérieur (L2) qui est défini à l'extérieur du bord extérieur de côté intérieur (L3), dans lequel le bord extérieur de côté intérieur (L3) et le bord extérieur de côté extérieur (L2) indiquent des limites d'un bord extérieur de la zone de préparation (R2), et
dans lequel le procédé d'aide à la commutation de mode de déplacement est **caractérisé en ce que** la transmission du signal de préparation comprend la transmission du signal de préparation si le véhicule (1) entre dans une zone à l'intérieur du bord extérieur de côté intérieur (L3) et la non-transmission du signal de préparation si le véhicule (1) sort vers une zone à l'extérieur du bord extérieur de côté extérieur (L2).

2. Procédé d'aide à la commutation de mode de déplacement selon la revendication 1,
dans lequel la détermination si le véhicule (1) est présent comprend la détermination si le véhicule (1) est présent dans la zone de préparation (R2) par un dispositif de commande d'aide (60) qui est monté sur le véhicule (1) et est configuré pour aider à la commutation du mode de déplacement du véhicule (1), et
dans lequel la transmission du signal de préparation comprend la transmission du signal de préparation par le dispositif de commande d'aide (60).

3. Procédé d'aide à la commutation de mode de déplacement selon la revendication 1 ou 2,
dans lequel la sortie prédéterminée est une notification d'informations configurée pour inciter la commutation au mode de déplacement spécifique défini pour correspondre à la zone de restriction (R1), et
dans lequel la sortie de la sortie prédéterminée comprend la sortie de la notification à un conducteur.

4. Procédé d'aide à la commutation de mode de déplacement selon la revendication 3,
dans lequel la sortie de la sortie prédéterminée comprend la notification des informations configurées pour inciter la commutation au mode de déplacement spécifique jusqu'à ce que la commutation au mode de déplacement spécifique défini pour correspondre à la zone de restriction (R1) soit effectuée s'il reçoit le signal de préparation.

5. Procédé d'aide à la commutation de mode de déplacement selon la revendication 1 ou 2,
dans lequel la sortie prédéterminée est un signal de commande configuré pour ordonner la commutation au mode de déplacement spécifique, et
dans lequel la sortie de la sortie prédéterminée comprend la sortie du signal de commande si un état de déplacement du véhicule (1) satisfait une condition d'autorisation de mode de déplacement prédéterminée.

6. Procédé d'aide à la commutation de mode de déplacement selon l'une quelconque des revendications 1 à 5, comprenant en outre :
la transmission d'un signal de restriction indiquant que le véhicule (1) est présent dans la zone de restriction (R1) s'il est déterminé que le véhicule (1) est présent dans la zone de restriction (R1),
dans lequel la sortie de la sortie prédéterminée comprend la notification à un conducteur d'informations indiquant que le véhicule (1) est présent dans la zone de préparation (R2) s'il reçoit le signal de préparation et la notification au conducteur d'une information de restriction indiquant que le véhicule (1) est présent dans la zone de restriction (R1) s'il reçoit le signal de restriction, et
dans lequel une forme de notification dans un cas de notification des informations indiquant que le véhicule (1) est présent dans la zone de préparation (R2) s'il reçoit le signal de préparation est différente d'une forme de notification dans un cas de notification des informations indiquant que le véhicule (1) est présent dans la zone de restriction (R1) s'il reçoit le signal de restriction.

7. Procédé d'aide à la commutation de mode de déplacement selon la revendication 1,
dans lequel la génération de l'information de zone de préparation comprend la génération de l'information de zone de préparation sur la base de l'information de limite de zone de restriction reçue d'un dispositif de serveur qui stocke l'information de limite de zone de restriction associée à la zone de restriction (R1).

8. Procédé d'aide à la commutation de mode de déplacement selon l'une quelconque des revendications 1 à 7,
dans lequel l'un de la zone de restriction (R1) et du mode de déplacement spécifique défini dans la zone de restriction (R1) est défini individuellement par un conducteur.

9. Procédé d'aide à la commutation de mode de déplacement selon la revendication 6,
dans lequel le procédé comprend en outre la notification au conducteur d'informations indiquant que le véhicule (1) est présent dans la zone de préparation (R2) en clignotant une unité de notification de zone de préparation (51) incluse dans un affichage (42) et dans lequel le procédé comprend en outre la non-transmission du signal de préparation lorsque le véhicule (1) se déplace dans une zone d'exception.

10. Programme d'aide à la commutation de mode de déplacement amenant au moins un processeur (43) à exécuter le procédé d'aide à la commutation de mode de déplacement selon l'une quelconque des revendications 1 à 9.

11. Support lisible par ordinateur non transitoire stockant le programme d'aide à la commutation de mode de déplacement selon la revendication 10.

12. Système d'aide à la commutation de mode de déplacement pour aider à la commutation d'un mode de déplacement d'un véhicule (1) configuré pour se déplacer dans une pluralité de modes de déplacement, le système d'aide à la commutation de mode de déplacement comprenant :
un dispositif de commande d'aide (60) configuré pour recevoir un signal de préparation indiquant que le véhicule (1) est présent dans une zone de préparation (R2) définie de manière adjacente à une zone de restriction (R1) dans laquelle un mode de déplacement spécifique à définir est prédéterminé ;
un dispositif de sortie (21) configuré pour communiquer avec le dispositif de commande d'aide (60) et sortir une sortie prédéterminée pour inciter la commutation d'un mode de déplacement en utilisation au mode de déplacement spécifique, lorsque le mode de déplacement du véhicule (1) est différent du mode de déplacement spécifique,
dans lequel le dispositif de commande d'aide (60) amène le dispositif de sortie (21) à sortir la sortie prédéterminée s'il reçoit le signal de préparation, et
dans lequel le dispositif de commande d'aide (60) est configuré pour :
recevoir une information de limite de zone de restriction indiquant une limite entre un côté intérieur et un côté extérieur de la zone de restriction (R1) ; et
générer une information de zone de préparation indiquant la zone de préparation (R2) à l'extérieur de la zone de restriction (R1) sur la base de l'information de limite de zone de restriction reçue,
dans lequel la génération de l'information de zone de préparation comprend la génération d'une information de limite de zone de préparation indiquant un bord extérieur de côté intérieur (L3) et un bord extérieur de côté extérieur (L2) qui est défini à l'extérieur du bord extérieur de côté intérieur (L3), dans lequel le bord extérieur de côté intérieur (L3) et le bord extérieur de côté extérieur (L2) indiquent des limites d'un bord extérieur de la zone de préparation (R2), et
dans lequel le système d'aide à la commutation de mode de déplacement est **caractérisé en ce que** la transmission du signal de préparation comprend la transmission du signal de préparation si le véhicule (1) entre dans une zone à l'intérieur du bord extérieur de côté intérieur (L3) et la non-transmission du signal de préparation si le véhicule (1) sort vers une zone à l'extérieur du bord extérieur de côté extérieur (L2).

13. Système d'aide à la commutation de mode de déplacement selon la revendication 12,
dans lequel le dispositif de sortie (21) comprend une unité de communication (32) connectée à un affichage (42) comprenant une unité de notification de zone de préparation (51) pour notifier à un conducteur des informations indiquant que le véhicule (1) est présent dans la zone de préparation (R2) en clignotant et dans lequel le dispositif de commande d'aide (60) ne transmet pas le signal de préparation lorsque le véhicule (1) se déplace dans une zone d'exception.
